# EUROPÄISCHE PATENTSCHRIFT

(11) **EP 2 253 485 B1**
(45) Veröffentlichungstag und Bekanntmachung des Hinweises auf die Patenterteilung: **18.01.2012**
(21) Anmeldenummer: 09176435.7
(22) Anmeldetag: 19.11.2009
(51) Int. Cl.: B60C 11/13, B60C 11/12, B60C 11/117

(54) **Laufstreifenprofil eines Fahrzeugluftreifens**
Run strip profile of a vehicle tyre
Profil de bande de roulement d'une bande pneumatique de véhicule

(30) Priorität: 20.05.2009 DE 102009025852
(43) Veröffentlichungstag der Anmeldung: 24.11.2010
(73) Patentinhaber: Continental Reifen Deutschland GmbH, 30165 Hannover (DE)
(72) Erfinder: Rittweger, Stefan, 30163, Hannover (DE)
(74) Vertreter: Finger, Karsten

(56) Entgegenhaltungen:
- EP-A2- 1 870 258
- WO-A1-2008/057151

## Beschreibung

Die Erfindung betrifft ein Laufstreifenprofil eines Fahrzeugreifens - insbesondere Fahrzeugluftreifens - mit durch Quer- bzw. Schrägrillen von einander beabstandeten, in Umfangsrichtung U des Fahrzeugreifens hintereinander angeordneten Profilblockelementen, bei dem Profilblockelemente in Umfangsrichtung jeweils durch eine Profilblockelementflanke und in radialer Richtung R des Fahrzeugreifens nach außen durch eine die Straßenkontaktfläche bildende Mantelfläche begrenzt sind, wobei diese Profilblockelementflanken jeweils die Rillenwand einer der beiden das Profilblockelement in Umfangsrichtung U begrenzenden Quer- bzw. Schrägrillen bilden und diese Profilblockelementflanken jeweils in radialer Richtung R aus dem Rillengrund der Quer- bzw. Schrägrille nach außen bis zur die Straßenkontaktfläche bildenden Mantelfläche erstreckt sind, wobei der Übergang zwischen Flanke und Straßenkontaktfläche bildender Mantelfläche an wenigstens einer der beiden Profilblockelementflanken über zumindest einen Teil der Erstreckung der Profilblockelementflanke in axialer Richtung A des Fahrzeugreifens mit einer Fase ausgebildet ist, bei dem die Fase über ihre Erstreckung längs der Profilblockelementflanke hinweg reichend mit einer oder mehreren Feineinschnitten ausgebildet ist.

Laufstreifenprofile eines Fahrzeugluftreifens mit in Umfangsrichtung durch Quer- bzw. Schrägrillen begrenzten Profilblockelementen auszubilden ist bekannt. Dabei bilden jeweils die dem Profilblockelement vorgeordnete und nachgeordnete Querrille in Umfangsrichtung des Fahrzeugluftreifens gesehen mit Ihrer zum Profilblockblockelement hin weisenden Rillenwand eine das Profilblockelement in Umfangsrichtung begrenzende Profilblockelementflanke, die sich in radialer Richtung aus dem Rillengrund nach außen bis zu der das Profilblockelement nach radial außen begrenzenden, die Straßenkontaktoberfläche bildenden Mantelfläche erstreckt. Beim Abrollen des Fahrzeugluftreifens auf der Straße schlägt das Profilblockelement beim Einlaufen in den Reifenlatsch mit seiner durch die Profilblockelementflanke und die Straßenkontaktoberfläche bildenden Mantelfläche gebildeten Schnittkante der in Drehrichtung vorgeordneten Profilblockelementflanke auf die Straßenoberfläche auf. Dabei rollt diese in Drehrichtung vordere Kante aufgrund der Biegeweichheit des Materials aufgrund der einwirkenden Belastung elastisch ein. Die Kante wird regelrecht von der Straßenkontaktoberfläche weggebogen. Dieser Effekt bewirkt zwar ein gedämpftes Einlaufen und somit geringe Geräuschentstehung beim Einlaufen. Allerdings bewirkt der Einrolleffekt auch eine reduzierte Kontaktoberfläche der radial äußeren Mantelfläche zur Straßenkontaktoberfläche und eine verzögerte und reduzierte Trockenbremswirkung.

Zur Reduzierung des Einrolleffektes ist es bekannt, im Übergangsbereich zwischen der das Profilblockelement in Umfangsrichtung begrenzenden Profilblockelementflanke und der nach radial außen das Profilblockelement begrenzenden die Straßenkontaktoberfläche bildenden Mantelfläche eine Fase auszubilden. Dieser gefaste Kantenbereich reduziert den Einrolleffekt und ermöglicht somit einen früheren und vollständigeren Bodenkontakt zur Straßenoberfläche beim Einlaufen in den Latsch während des Bremsens auf trockener Straße, wodurch die Trockenbremseigenschaften verbessert werden können. Die durch die Fase erhöhte Steifigkeit des Übergangsbereichs zwischen Profilblockelementflanke und der die Straßenkontaktoberfläche bildenden Mantelfläche des Profilblockelementes führt durch die hierdurch erhöhte Steifigkeit dieses Bereiches jedoch auch zu einem deutlich ungedämpfteren Aufschlagen des Übergangsbereichs auf die Straßenoberfläche und hierdurch zu erhöhter Geräuschbildung.

Aus der WO 2008/057151 A1 ist ein Laufstreifenprofil bekannt, bei dem Profilblockelemente durch im Querschnitt im Wesentlichen u-förmige Kanalstniktwen von einander getrennt sind. Bei diesen kanalförmigen Strukturen sind im radial inneren Kanalgrund übergehenden Erstreckungsbereich Feineinschnitte ausgebildet. Aus diesem Dokument ist eine Ausführungsform bekannt, bei der zusätzlich im Grund des u-förmigen Kanals ein weiterer schmaler Kanal überlagert ist.

Der Erfindung liegt daher die Aufgabe zugrunde, bei derartigen Laufstreifenprofilen mit einfachen Mitteln gute Trockenbremseigenschaften bei reduzierter Geräuschbildung zu ermöglichen.

Erfindungsgemäß wird die Aufgabe durch die Ausbildung eines Laufstreifenprofils eines Fahrzeugreifens - insbesondere Fahrzeugluftreifens - mit durch Quer- bzw. Schrägrillen von einander beabstandeten, in Umfangsrichtung U des Fahrzeugreifens hintereinander angeordneten Profilblockelementen, bei dem Profilblockelemente in Umfangsrichtung jeweils durch eine Profilblockelementflanke und in radialer Richtung R des Fahrzeugreifens nach außen durch eine die Straßenkontaktfläche bildende Mantelfläche begrenzt sind, wobei diese Profilblockelementflanken jeweils die Rillenwand einer der beiden das Profilblockelement in Umfangsrichtung U begrenzenden Quer- bzw. Schrägrillen bilden und diese Profilblockelementflanken jeweils in radialer Richtung R aus dem Rillengrund der Quer- bzw. Schrägrille nach außen bis zur die Straßenkontaktfläche bildenden Mantelfläche erstreckt sind, wobei der Übergang zwischen Flanke und Straßenkontaktfläche bildender Mantelfläche an wenigstens einer der beiden Profilblockelementflanken über zumindest einen Teil der Erstreckung der Profilblockelementflanke in axialer Richtung A des Fahrzeugreifens mit einer Fase ausgebildet ist, bei dem die Fase über ihre Erstreckung längs der Profilblockelementflanke hinweg reichend mit einem oder mehreren Feineinschnitten ausgebildet ist, gemäß den Merkmalen von Anspruch 1 gelöst, bei dem der Feineinschnitt mit seiner Erstreckung in der Fase geradlinig jeweils unter Einschluss eines Winkels α zur zugeordneten Profilblockelementflanke ausgebildet ist mit 180° > α > 0°, insbesondere mit 80° ≤ α ≤100°, und bei dem der Feineinschnitt jeweils in Verlängerung über die Fase hinaus in der die Straßenkontaktfläche bildenden Mantelfläche bis in einen Abstand a von der der Fase zuzuordnenden Profilblockelementflanke erstreckt ist mit a ≤ (1/3)L, wobei L die in der Position des Feineinschnitts an der der Fase zuzuordnenden Profilblockelementflanke in Umfangsrichtung U des Fahrzeugreifens gemessenen Erstreckungslänge des Profilblockelementes ist.

Die Ausbildung ermöglicht die Nutzung der Vorteile einer Fase im Übergangsbereich von der das Profilblockelement in Umfangsrichtung begrenzenden Profilblockelementflanke zu der das Profilblockelement nach radial außen begrenzenden, die Straßenkontaktoberfläche bildenden Mantelfläche der durch reduzierte Einrolleffekte ermöglichten guten Trockenbremseigenschaften bei durch die Vertiefungen reduzierte Steifigkeit der Fase bedingter erhöhter Dämpfung beim Aufschlagen der Fase während des Einlaufs in den Reifenlatsch und somit reduzierter Geräuschbildung. In einfacher Weise kann eine Steifigkeitsreduktion der Fase und somit die Reduktion der Geräuschentstehung bei Beibehaltung der durch den Profilblock beeinflussten Fahreigenschaften sichergestellt werden. Die Steifigkeit der Fase kann in einfacher Weise individuell fein eingestellt abgesenkt und die Geräuschbildung reduziert werden. Die Feineinschnitte bilden darüber hinaus zusätzliche Griffkanten zum besseren Griff auf Eis und Nässe. Die Steifigkeit der Fase kann individuell in Längs- und Querrichtung sehr fein optimiert gestellt werden.

Besonders vorteilhaft ist die Ausbildung eines Laufstreifenprofils gemäß den Merkmalen von Anspruch 2, bei dem die Fase über ihre Erstreckung längs der Profilblockelementflanke hinweg reichend mit mehreren in Erstreckungsrichtung der Profilblockelementflanke verteilt und jeweils im Abstand c zueinander angeordneten Vertiefungen ausgebildet ist mit c ≥ 1mm, insbesondere mit c ≤ 10mm. Hierdurch kann in einfacher Weise eine Reduzierung der Geräuschbildung umgesetzt werden.

Besonders vorteilhaft ist die Ausbildung eines Laufstreifenprofils gemäß den Merkmalen von Anspruch 3, bei dem der Feineinschnitt mit einer in radialer Richtung R des Fahrzeugreifens gemessenen maximalen Tiefe t₁ ausgebildet ist mit t₁ ≤ (2/3)P_{T}, wobei P_{T} die maximale Profiltiefe gemessen in der der Fase zuzuordnenden Querrille ist.

Besonders vorteilhaft ist die Ausbildung eines Laufstreifenprofils gemäß den Merkmalen von Anspruch 4, bei dem der Feineinschnitt mit einer in radialer Richtung R des Fahrzeugreifens gemessenen maximalen Tiefe t₁ ausgebildet ist mit 1mm ≤ t₁ ≤3mm.

Besonders vorteilhaft ist die Ausbildung eines Laufstreifenprofils gemäß den Merkmalen von Anspruch 5, bei dem der Feineinschnitt mit einer Verlängerung über die Fase hinaus in der der Fase zuzuordnenden Profilblockelementflanke ausgebildet ist und in der Profilblockelementflanke seine ausgehend von der radial äußeren Mantelfläche in radialer Richtung R des Fahrzeugreifens gemessene maximalen Tiefe t₁ aufweist.

Besonders vorteilhaft ist die Ausbildung eines Laufstreifenprofils gemäß den Merkmalen von Anspruch 6, wobei die Fase als zumindest im Wesentlichen ebene zur Mantelfläche geneigte Fläche ausgebildet ist, die längs der Schnittlinie mit der die radial äußere Mantelfläche bildenden Oberfläche des Profilblockelementes einen Winkel β mit der die radial äußere Mantelfläche bildenden Oberfläche einschließt mit 30° ≤ β ≤ 60° - insbesondere mit β = 45°. Auf diese Weise kann besonders zuverlässig der Einrolleffekt reduziert werden.

Besonders vorteilhaft ist die Ausbildung eines Laufstreifenprofils gemäß den Merkmalen von Anspruch 7, wobei die Fase in Form einer Hohlkehle ausgebildet ist, deren Krümmungsachse auf der vom Profilblockelement weggewandten Seite der Fase angeordnet und die sich längs der Querrille erstreckt, mit Krümmungsradien R_{H} der Hohlkehle, die innerhalb des Erstreckungsbereichs der Fase mit 2mm ≤ R_{H} ≤ 10mm ausgebildet sind. Auf diese Weise kann die gewünschte Steifigkeit der Fase noch feiner individuell optimiert eingestellt werden.

Besonders vorteilhaft ist die Ausbildung eines Laufstreifenprofils gemäß den Merkmalen von Anspruch 8, wobei die Hohlkehle längs der gesamten Erstreckung der Fase mit konstantem Krümmungsradius ausgebildet ist.

Besonders vorteilhaft ist die Ausbildung eines Laufstreifenprofils gemäß den Merkmalen von Anspruch 9, wobei die Hohlkehle längs der Erstreckung der Fase mit kontinuierlich zunehmendem Krümmungsradius ausgebildet ist.

Die Erfindung wird im Folgenden an Hand der in den Figuren 1 bis 20 dargestellten Ausführungsbeispiele näher erläutert. Dabei zeigen
- Fig. 1: Darstellung eines erfindungsgemäßen Profilblockelementes in Schnittdarstellung mit Schnitt längs einer das Profilblockelement begrenzenden Querrille in Draufsicht auf die Profilblockelementflanke,
- Fig.2: Profilblockelement von Fig.1 in Draufsicht auf die die Straßenkontaktoberfläche bildende Mantelfläche,
- Fig.3: Profilblockelement von Fig. 1 und Fig.2 in perspektivischer Darstellung,
- Fig.4: Profilblockelement in Darstellung gemäß Fig. 1 mit alternativer Ausführung der Vertiefungen,
- Fig. 5: Profilblockelement von Fig.4 in Draufsicht analog zur Darstellung von Fig.2,
- Fig.6: Profilblockelement von Fig.4 und Fig.5 in perspektivischer Darstellung,
- Fig.7: Profilblockelement gemäß Darstellung von Fig.1 in weiterer alternativer nicht erfindungsgemäßer Ausführung der Vertiefungen,
- Fig.8: Profilblockelement von Fig.7 in Draufsicht analog der Darstellung von Fig.2,
- Fig.9: Profilblockelement von Fig.7 und Fig.8 in perspektivischer Darstellung,
- Fig. 10: Profilblockelement in Darstellung von Fig. 1 mit alternativer nicht erfindungsgemäßer Ausbildung mit nur einer Vertiefung,
- Fig. 11: Profilblockelement von Fig. 10 in Draufsicht analog der Darstellung von Fig.2,
- Fig. 12: Profilblockelement von Fig. 10 und Fig.11 in perspektivischer Darstellung, Fig. 13 Profilblockelement in perspektivischer Darstellung analog zur Darstellung von Fig.3 mit alternativer nicht erfindungsgemäßer Ausbildung der Vertiefungen,
- Fig. 14: Profilblockelement von Fig. 13 in Draufsicht analog der Darstelllung von Fig.2,
- Fig. 15: Profilblockelement gemäß Darstellung von Fig. in alternativer Ausbildung der Fase,
- Fig. 16: Profilblockelement von Fig. 15 in analoger Darstellung zu Fig.2,
- Fig. 17: Profilblockelement von Fig. 15 und Fig. 16 gemäß Schnitt XVII-XVII von Fig. 16,
- Fig. 18: Profilblockelement von Fig. 15, Fig. 16 und Fig. 17 in perspektivischer Darstellung analog zur Darstellung von Fig.3,
- Fig. 19: Draufsicht auf den Umfangsabschnitt eines beispielhaften Laufstreifenprofils mit erfindungsgemäßer Ausbildung im Bereich der Reifenschulter,
- Fig.20: Schnittdarstellung der Schulterprofilblockreihe von Fig. 19 gemäß Schnitt XX-XX von Fig. 19.

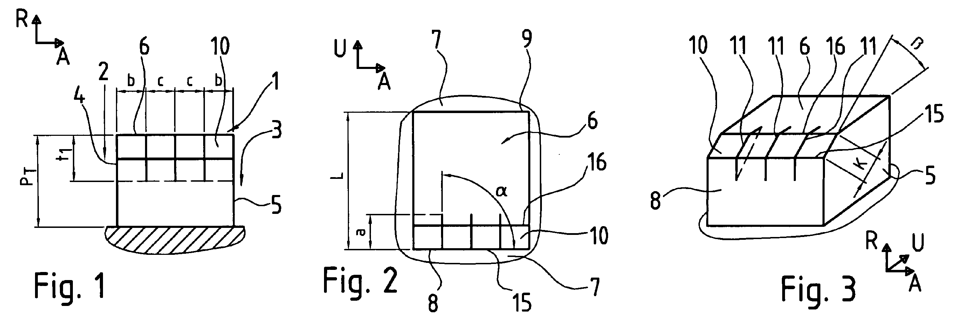

Die Figuren 1 bis 3 zeigen ein Profilblockelement 1 eines Fahrzeugluftreifens für Pkw-Reifen, welches in axialer Richtung A des Fahrzeugluftreifens durch eine Umfangsrille 2 und durch eine Umfangsrille 3 bekannter Art, in Umfangsrichtung U jeweils durch eine Querrille 7 bekannter Art und in radialer Richtung durch eine radial äußere die Straßenkontaktoberfläche bildende Mantelfläche 6 begrenzt ist. Die Umfangsrille 2 bildet mit ihrer zum Profilblockelement 1 gerichteten Rillenwand die das Profilblockelement 1 zur Umfangsrille 2 hin begrenzende Profilelementflanke 4. Die Umfangsrille 3 bildet mit ihrer zum Profilblockelement 1 hin gerichteten Rillenwand die das Profilblockelement 1 zur Umfangsrille 3 hin begrenzende Profilblockelementflanke 5. Die beiden das Profilblockelement 1 in Umfangsrichtung U begrenzenden Querrillen 7 bilden jeweils mit ihrer zum Profilblockelement 1 hin gerichteten Rillenwand die das Profilblockelement zu der jeweiligen Querrille 7 hin begrenzende Profilblockelementflanke 8 bzw. 9. Die Profilblockelementflanke 4 erstreckt sich in radialer Richtung R des Fahrzeugluftreifens aus dem Rillengrund der Umfangsrille 2 bis zu der radial äußeren, die Straßenkontaktoberfläche bildenden Mantelfläche 6. Die Profilblockelementflanke 5 erstreckt sich in radialer Richtung R des Fahrzeugluftreifens aus dem Rillengrund der Umfangsrille 3 bis zu der die radial äußere Straßenkontaktoberfläche bildenden Mantelfläche 6. Die in Drehrichtung des Fahrzeugluftreifens bei Vorwärtsfahrt dem Profilblockelement 1 nachgeordnete Profilblockelementflanke 9 des Profilblockelementes 1 erstreckt sich in radialer Richtung R aus dem Rillengrund der zugeordneten Querrille 7 bis zu der die radial äußere Straßenkontaktoberfläche bildenden Mantelfläche 6. Die das Profilblockelement 1 in Drehrichtung des Fahrzeugluftreifens bei Vorwärtsfahrt dem Profilblockelement 1 vorgeordnete Profilblockelementflanke 8 des Profilblockelements erstreckt sich in radialer Richtung R aus dem Rillengrund der zugeordneten Querrille 7 bis zu der die Straßenkontaktoberfläche bildenden Mantelfläche 6.

Im Übergang zwischen der Profilblockelementflanke 8 und der radial äußeren, die Straßenkontaktoberfläche bildenden Mantelfläche 6 ist eine eine ebene Fläche bildende Fase 10 ausgebildet, die eine untere Schnittkante 15 mit der Profilblockelementflanke 8 und eine obere Schnittkante 16 mit der radial äußeren, die Straßenkontaktoberfläche bildenden Mantelfläche 6 bildet. Die Schnittkanten 15 und 16 sind geradlinig und parallel zueinander mit Anstand k zueinander ausgebildet. Die Schnittkanten 15 und 16 und die Fase 10 erstrecken sich längs der durch die Profilblockelementflanke 8 begrenzten Querrille 7, d.h. im dargestellten Ausführungsbeispiel in axialer Richtung A.

Die Fase 10 schließt mit der die Straßenkontaktoberfläche bildenden Mantelfläche 6 einen Schnittwinkel β ein mit 30° ≤ β ≤ 60°. Im dargestellten Ausführungsbeispiel ist β = 45° gewählt.

Der Abstand k zwischen der unteren Schnittkante 15 und der oberen Schnittlinie 16 ist mit 1 mm ≤ k ≤ 6mm ausgebildet. Im dargestellten Ausführungsbeispiel ist k = 5mm gewählt.

Wie in den Figuren 1 bis 3 dargestellt ist, sind längs der Erstreckung der oberen und unteren Schnittkante 16 bzw. 15 gleichmäßig mit Abstand c zueinander beabstandet Feineinschnitte 11 ausgebildet, die sich jeweils mit einem Winkel α mit α = 90° zur unteren Schnittlinie 15 und zur oberen Schnittlinie 16 sowie zur Erstreckungsrichtung der Profilblockflanke 8 durch die Fase 11 hindurch erstrecken. Der zur Profilblockelementflanke 4 nächstgelegene Feineinschnitt 11 ist mit einem Abstand b zur Profilblockelementflanke 4 und somit zum einen Erstreckungsende der Fase 10 angeordnet. Der der Profilblockelementflanke 5 nächstgelegene Feineinschnitt 11 ist ebenfalls mit Abstand b zu der Profilblockelementflanke 5 und somit zu dem anderen Erstreckungsende der Fase 10 angeordnet.

Die Abstände c und b sind derart gewählt, dass 1mm ≤ c ≤ 10mm
und 1 mm ≤ b ≤ 5mm.

Im dargestellten Ausführungsbeispiel ist c = b gewählt. Im dargestellten - zwecks Verdeutlichung vergrößert - dargestellten Ausführungsbeispiel ist c = b = 4mm gewählt.

Die Feineinschnitte 11 erstrecken sich ausgehend von der die radial äußere Straßenkontaktoberfläche bildenden Mantelfläche 6 in radialer Richtung nach innen bis in eine maximale Tiefe t₁ die die Feineinschnitte 11 jeweils in der Profilblockelementflanke 8 erreichen. In Fig. 3 ist am Beispiel des links dargestellten Feineinschnitt 11 mit gestrichelter Linie der Tiefenverlauf des Feineinschnitts 11 dargestellt. Dabei ist erkennbar, dass in dieser Ausführung der Tiefenverlauf längs der Erstreckung des Feineinschnittes 11 eine parallel zur Fase 10 ausgerichtete Gerade ist. Der Feineinschnitt 11 erstreckt sich hierdurch ausgehend von der Fase 10 in Verlängerung über die obere Schnittkante 16 hinaus bis in die Straßenkontaktoberfläche bildende Mantelfläche 6 hinein bis in einen Abstand a von der Profilblockelementflanke 8.

Für die Maße a und die Tiefenerstreckung t₁ gilt dabei: t₁ ≤ (2/3) P_{T}
und a ≤ (1/3) L, wobei P_{T} die maximale Profiltiefe gemessen in der der Fase 10 zuzuordnenden Querrille 7 ist und wobei L die in der Position des Feineinschnitts 11 an der unteren Schnittkante 15 und somit an der der Fase 10 zuzuordnenden Profilblockelementflanke 8 in Umfangsrichtung U des Fahrzeugreifens gemessene Erstreckungslänge des Profilblockelementes 1 ist.

Im dargestellten Ausführungsbeispiel eines Fahrzeugluftreifens im Neuzustand ist t₁ = 3mm und a = 3mm gewählt.

Die Feineinschnitte 11 sind jeweils mit einer konstanten Feineinschnittsbreite von mindestens 0,4 mm bis maximal 0,8 mm, beispielsweise von 0,6 mm ausgebildet.

In den Figuren 1 bis 3 ist lediglich eine Ausführung eines Profilblockelementes 1 mit drei Feineinschnitten 11 in der Fase 10 dargestellt.

Je nach Erstreckungslänge der Profilblockelementflanke 8 bzw. der Fase 10 längs der Profilblockelementflanke 8 sind anderer Ausführung unter Berücksichtigung der Abstände c und b auch mehr Feineinschnitte 11 ausgebildet.

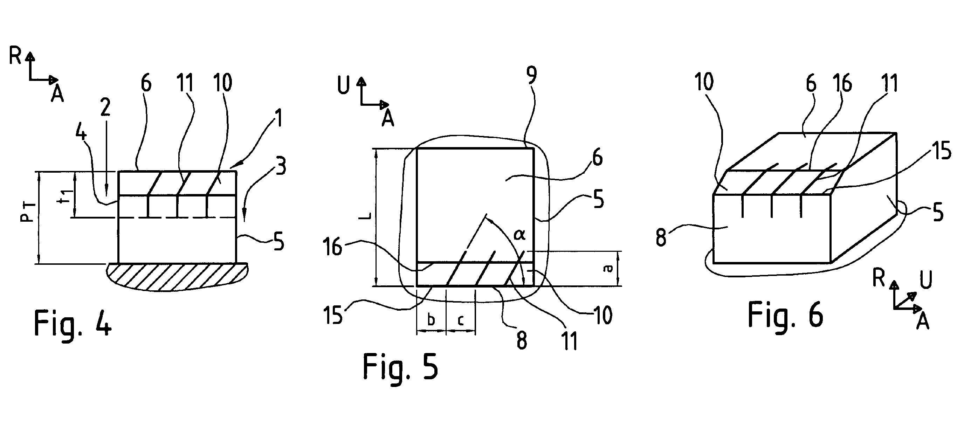

Die Figuren 4 bis 6 zeigen ein Ausführungsbeispiel eines in den Figuren 1 bis 3 dargestellten Profilblockelements 1, bei dem jedoch die Feineinschnitte 11 in der Fase 10 mit einem Neigungswinkel α zur unteren Schnittkante 15 und somit zur Profilblockelementflanke 8 ausgerichtet ausgebildet sind, der kleiner ist als 90°. Der Neigungswinkel α ist dabei so gewählt, dass 80° ≤ α ≤ 100°. Im dargestellten Ausführungsbeispiel ist α = 80° gewählt.

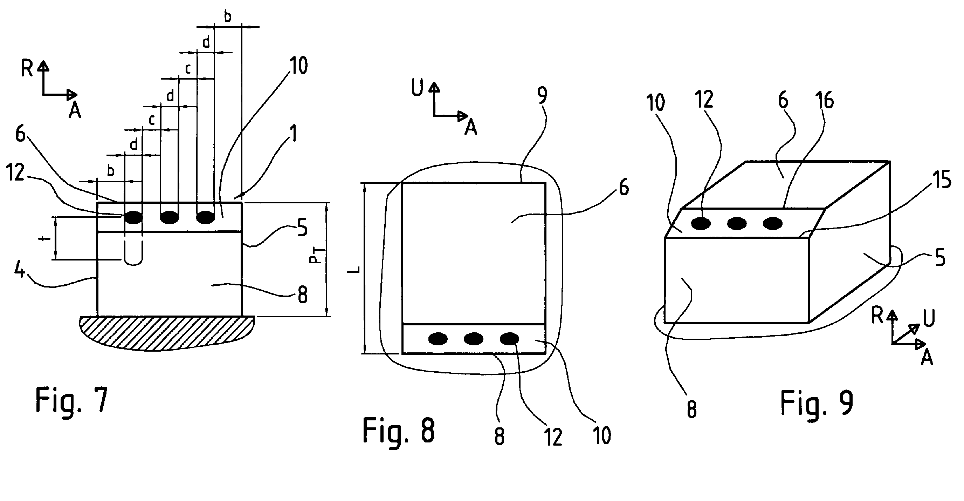

Die Figuren 7 bis 9 zeigen ein nicht erfindungsgemäßes Ausführungsbeispiel des Profilblockelementes 1 der Figuren 1 bis 3, bei welchem anstelle der Feineinschnitte 11 längs der Erstreckungsrichtung der Fase 10, der unteren Schnittkante 15 und der oberen Schnittkante 16 mehrere senkrecht zur Oberfläche der Fase 10 ausgebildete Löcher 12 elliptischen Querschnitts ausgebildet sind. Die Ellipsen sind dabei so ausgerichtet, dass ihr größerer Hauptdurchmesser d parallel zur Erstreckungsrichtung der Fase 10 und somit zur Erstreckung der unteren Schnittkante 15 und der oberen Schnittkante 16 ausgerichtet ist und dass ihr kürzerer Hauptdurchmesser hierzu senkrecht ausgerichtet ausgebildet ist. Der größere Hauptdurchmesser d ist dabei so bemessen, dass 1 mm ≤ d ≤ 2mm. Die Löcher sind in radialer Richtung R des Fahrzeugluftreifens gesehen mit einer Tiefe t ausgebildet, die ausgehend von der Position des größeren Durchmessers in der Fase 10 nach radial innen gemessen wird und für die gilt: 1 mm ≤ t ≤ 5mm.

Analog zu den Ausführungsbeispielen der Figuren 1 bis 3 und der Figuren 4 bis 6 sind in den in den Figuren 7 bis 9 dargestellten Ausführungsbeispiel die Löcher 12 im Abstand c zueinander ausgebildet. Ebenso sind die jeweils in der Fase 10 axial am weitesten außen positionierten Löcher 12 jeweils im Abstand b zur der jeweils benachbarten Profilblockelementflanke 4 bzw. 5 und somit zum jeweiligen axialen Ende der Fase 12 ausgebildet. Die Maße c und b sind entsprechend den im Zusammenhang mit den oben bereits genannten Ausführungsbeispielen gewählten Maßen.

Im dargestellten Ausführungsbeispiel ist d = 2mm, t = 3mm, c = 2mm und b = 2mm gewählt.

Der Bezug zwischen t und P_{T} ist auch bei diesen Ausführungen wie im Zusammenhang mit den in den Figuren 1 bis 3 beschrieben mit t₁ ≤ (2/3) P_{T} gewählt.

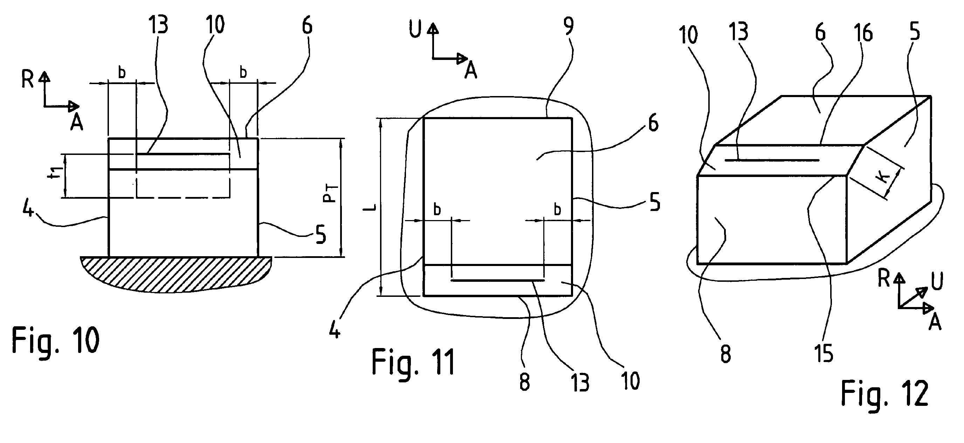

Die Figuren 10 bis 12 zeigen ein nicht erfindungsgemäßes Ausführungsbeispiel des Blockprofilelements 1 der Figuren 1 bis 3, bei dem jedoch in der Fase 10 lediglich ein einziger parallel zur oberen und unteren Schnittkante 15 bzw. 16 verlaufender Feineinschnitt 13 entlang der Abstandshalbierenden zwischen den beiden Schnittkanten 15 und 16 ausgebildet ist. Der Feineinschnitt 13 erstreckt sich über die gesamte Fase 10 bis jeweils in einen Abstand b von der Profilblockelementflanke 4 bzw. Profilblockelementflanke 5 und somit vom jeweiligen Erstreckungsende der Fase 10. Der Abstand b ist wie in den vorangegangenen Ausführungsbeispielen dargelegt gewählt. Der Feineinschnitt 13 erstreckt sich senkrecht zur Oberfläche der Fase 10 in das Profilblockelement 1 hinein bis in eine in radialer Richtung R des Fahrzeugluftreifens gemessene Tiefe t₁, deren Tiefe der maximalen Tiefe t₁ der in den Ausführungsbeispielen 1 bis 3 definierten Größe entspricht. Der Feineinschnitt 13 ist dabei längs seiner gesamten Erstreckung in einer Ausführung mit konstanter Tiefe t₁ ausgebildet.

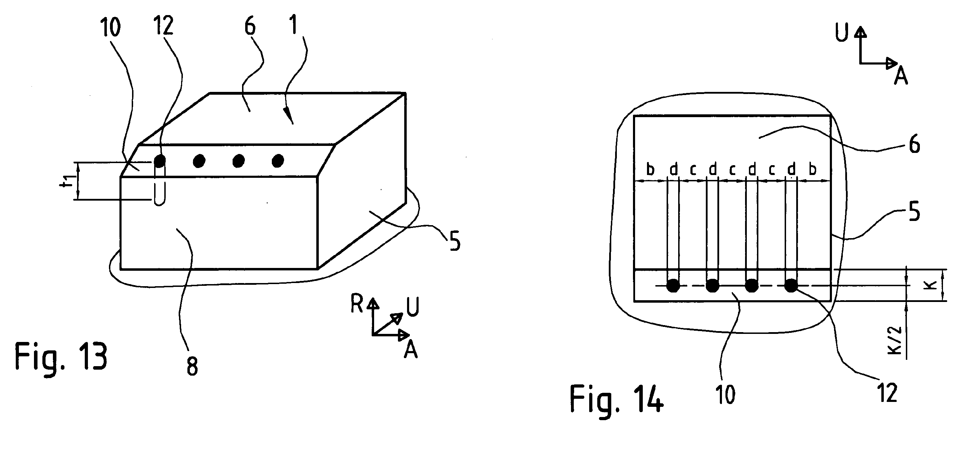

Die Figuren 13 und 14 zeigen ein nicht erfindungsgemäßes Ausführungsbeispiel eines Profilblockelementes 1, das wie das in den Figuren 7 bis 9 dargestellte Ausführungsbeispiel mit in der Fase 10 ausgebildeten Löchern 12 ausgebildet ist, wobei in dieser Ausführung die Löcher 12 einen kreisförmigen Querschnitt mit Durchmesser d aufweisen. Die Dimensionierungen der Löcher 12 entsprechen den zum Ausführungsbeispiel der Figuren 7 bis 9 angegebenen Dimensionierungen. Der Durchmesser d ist entsprechend den zum Ausführungsbeispiel von den Figuren 7 bis 9 erfolgten Dimensionierungen des dort größeren Durchmesser d der Ellipse ausgebildet.

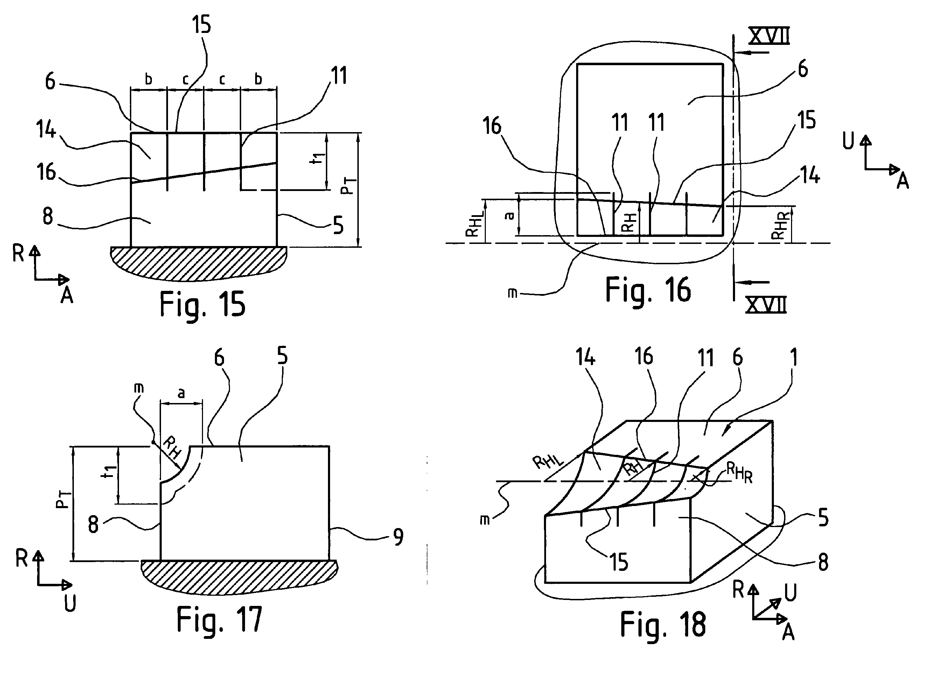

Die Figuren 15 bis 18 zeigen ein Ausführungsbeispiel des Profilblockelementes 1 der Figuren 1 bis 3, bei dem die Fase 14 in Form einer Hohlkehle ausgeführt ist mit einer Krümmungsachse m, die parallel zur Profilblockflanke 8 auf der vom Profilblockelement 1 wegweisenden Seite der Fase 14 ausgebildet ist. Längs der Erstreckung der Fase ist - in den Fig. 15, Fig. 16, Fig. 18 von links nach rechts dargestellt - der Krümmungsradius R_{H} der in Form einer Hohlkehle ausgebildeten Fase 14 von einem Maximalwert Wert R_{HL} am linken axialen Erstreckungsrand der Fase 14 bis zu einem Minimalwert R_{HR} am rechten Erstreckungsrand der Fase 14 kontinuierlich abnehmend ausgebildet. Bei diesem Ausführungsbeispiel steigt die Schnittkante 15 vom linken axialen Erstreckungsende der Fase 14 zum rechten axialen Erstreckungsende der Fase 14 in radialer Richtung R des Fahrzeugluftreifens kontinuierlich an. Ebenso nähert sich die obere Schnittkante 16 ausgehend vom linken Erstreckungsende der Fase 14 zum rechten Erstreckungsende der Fase 14 kontinuierlich der Ebene der Profilblockelementflanke 8.

Die Krümmungsradien R_{H} sind dabei so ausgebildet, dass 2mm ≤ R_{H} ≤ 10mm.

Im dargestellten Ausführungsbeispiel ist der auf der linken Seite dargestellte maximale Krümmungsradius R_{HL} = 8mm und der auf der rechten Seite dargestellte minimale Krümmungsradius R_{HR} = 4mm gewählt.

In einem nicht dargestellten Ausführungsbeispiel ist eine Hohlkehle mit längs der gesamten Erstreckung der Fase 14 konstantem Krümmungsradius R_{H} ausgebildet. In einem Ausführungsbeispiel ist R_{H} = 4mm gewählt.

Fig. 17 zeigt, dass der Tiefenverlauf der Feineinschnitte 11 bei diesem Ausführungsbeispiel im Wesentlichen ebenfalls jeweils einem Kreisradius folgt.

Im dargestellten Ausführungsbeispiel sind dabei die Feineinschnitte 11 im unmittelbaren Nahbereich zur Profilblockelementflanke 8 jeweils soweit in radialer Richtung verlängert, dass alle Feineinschnitte 11 die gleiche maximale Tiefe t₁ aufweisen.

In anderer - nicht dargestellter Ausführung - sind die Feineinschnitte 11 jeweils bis zu einer zur unteren Schnittkante 15 parallelen Geraden in der Profilblockelementflanke 8 verlängert ausgebildet, so dass Feineinschnitte von links nach rechts gesehen mit abnehmender maximaler Tiefe t₁ ausgebildet sind.

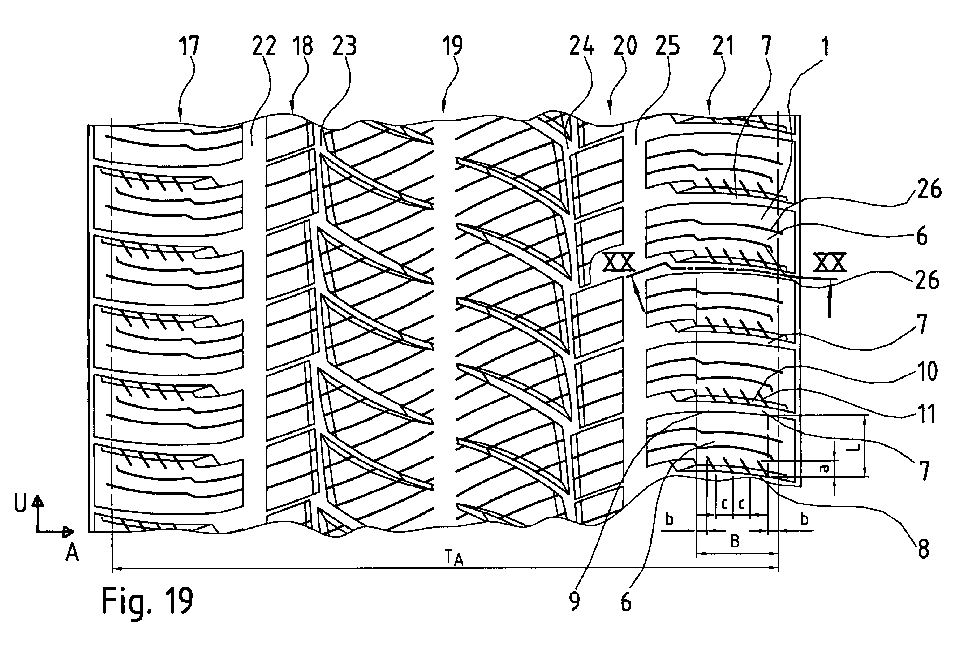

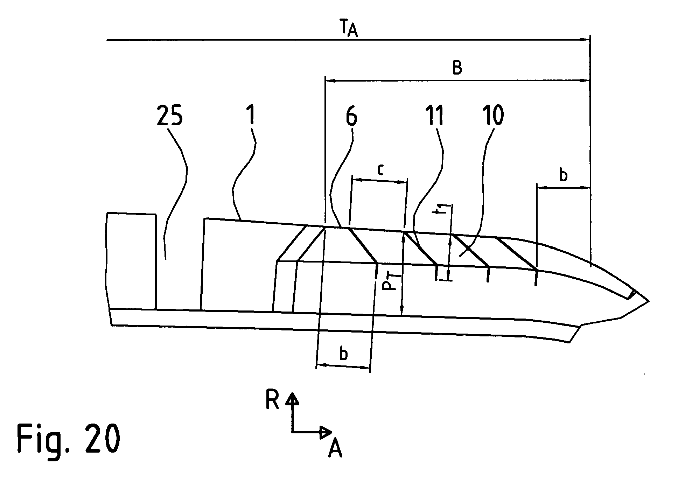

Die Figuren 19 und 20 zeigen beispielhaft ein Laufstreifenprofil für Pkw-Fahrzeugluftreifen mit von linker Reifenschulter ausgehend zur rechten Reifenschulter hin in axialer Richtung A nebeneinander angeordnet, jeweils in Umfangsrichtung U ausgerichtet einer Profilblockelementreihe 17, einer Profilblockelementreihe 18, einer Profilrippe 19, einer Profilblockelementreihe 20 und eine Profilblockelementreihe 21 bekannter Art. Die Bodenaufstandsfläche erstreckt sich in axialer Richtung A mit ihrer Bodenaufstandsbreite T_{A} von der linken zur rechten Reifenschulter hin. Die Profilblockelementreihe 17 und die Profilblockelementreihe 18 sind in bekannter Weise durch eine in Umfangsrichtung U ausgerichtete und über den gesamten Umfang des Fahrzeugluftreifens erstreckte Umfangsrille 22 axial voneinander getrennt. Die Profilblockelementreihe 18 und die Profilrippe 19 sind in axialer Richtung in bekannter Weise durch eine über den gesamten Umfang des Fahrzeugluftreifens erstreckte in Umfangsrichtung U ausgerichtete Umfangsrille 23 bekannter Art voneinander getrennt. Die Profilrippe 19 und die Profilblockelementreihe 20 sind in axialer Richtung durch eine in Umfangsrichtung U ausgerichtete und über den gesamten Umfang des Fahrzeugluftreifens erstreckte Umfangsrille 24 bekannter Art voneinander getrennt. Die Profilblockelementreihe 20 und die Schulterprofilblockreihe 21 sind in bekannter Weise durch eine in Umfangsrichtung U ausgerichtete über den gesamten Umfang des Fahrzeugluftreifens erstreckte Umfangsrille 25 bekannter Art axial voneinander beabstandet.

Die Profilblockelemente 18 und 20 sind jeweils aus über den Umfang des Fahrzeugluftreifens verteilten und in Umfangsrichtung U hintereinander angeordneten, jeweils durch eine Querrille voneinander beabstandeten Profilblockelementen ausgebildet. Ausgehend von der Umfangsrille 24 erstrecken sich eine Vielzahl von in Umfangsrichtung U hintereinander angeordneten schräg verlaufenden Querrillen in axialer Richtung bis in die Profilrippe 19 hinein und enden dort. Ausgehend von der Umfangsrille 23 sind über den Umfang des Fahrzeugluftreifens verteilt angeordnet eine Vielzahl von schräg verlaufenden Querrillen ausgebildet, die sich in axialer Richtung in die Profilrippe 19 hinein erstrecken und dort enden.

Die Profilblockelementreihe 21 ist aus einer Vielzahl von in Umfangsrichtung U hintereinander angeordneten Profilblockelementen 1 ausgebildet, die in Umfangsrichtung U jeweils durch eine Querrille 7 voneinander getrennt sind. Die Profilblockelemente 1 sind dabei in Umfangsrichtung U mit jeweils einer Profilblockelementflanke 8 und einer Profilblockelementflanke 9 ausgebildet. In einem axialen Erstreckungsbereich der Breite B vom axialen Rand der Bodenaufstandsfläche der Aufstandsbreite TA nach axial innen hin ist die Profilblockelementflanke 8 - wie in den Figuren 4 bis 6 dargestellt - mit einer Fase 10 und entsprechenden Feineinschnitten 11 ausgebildet, wobei in dem in Figur 19 dargestellten Ausführungsbeispiel der Neigungswinkel α > 90° gewählt ist. In dargestellten Ausführungsbeispiel ist α = 100° gewählt. In dem an den axialen Erstreckungsbereich B nach axial innen anschließendem Erstreckungsbereich ist die Profilblockelementflanke 8 ohne Fase ausgebildet. Wie in Fig. 19 zu erkennen ist, sind die Feineinschnitte 11 auch hier an der unteren Schnittkante 15 bzw. an der oberen Schnittkante 16 jeweils mit Abstand c zueinander, der dem Rand der Bodenaufstandsfläche nächst gelegene Feineinschnitt 11 mit Abstand b zum Rand der Bodenaufstandsfläche und der dem axial inneren Erstreckungsende der Fase 10 nächstgelegene Feineinschnitt 11 ebenfalls mit Abstand b zum Erstreckungsende der Fase 10 ausgebildet.

In analoger Weise ist auch die Profilblockelementreihe 17 mit entsprechenden Profilblockelementen 1 ausgebildet, die der Ausführung der in den Figuren 4 bis 7 dargestellten Ausbildung entspricht.

### Bezugszeichenliste

### (Teil der Beschreibung)

- 1: Profilblockelement
- 2: Umfangsrille
- 3: Umfangsrille
- 4: Profilblockelementflanke
- 5: Profilblockelementflanke
- 6: Radial äußere Straßenkontaktoberfläche bildende Mantelfläche
- 7: Querrille
- 8: Profilblockelementflanke
- 9: Profilblockelementflanke
- 10: Fase
- 11: Feineinschnitt
- 12: Loch
- 13: Feineinschnitt
- 14: Fase
- 15: Schnittkante
- 16: Schnittkante
- 17: Profilblockelementreihe
- 18: Profilblockelementreihe
- 19: Profilrippe
- 20: Profilblockelementreihe
- 21: Profilblockelementreihe
- 22: Umfangsrille
- 23: Umfangsrille
- 24: Umfangsrille
- 25: Umfangsrille
- 26: Feineinschnitt

## Patentansprüche

1. Laufstreifenprofil eines Fahrzeugreifens - insbesondere Fahrzeugluftreifens - mit durch Quer- bzw. Schrägrillen (7) von einander beabstandeten, in Umfangsrichtung U des Fahrzeugreifens hintereinander angeordneten Profilblockelementen (1), bei dem Profilblockelemente (1) in Umfangsrichtung U jeweils durch eine Profilblockelementflanke (8,9) und in radialer Richtung R des Fahrzeugreifens nach außen durch eine die Straßenkontaktfläche bildende Mantelfläche (6) begrenzt sind, wobei diese Profilblockelementflanken (8,9) jeweils die Rillenwand einer der beiden das Profilblockelement (1) in Umfangsrichtung U begrenzenden Quer- bzw. Schrägrillen (7) bilden und diese Profilblockelementflanken (8,9) jeweils in radialer Richtung R aus dem Rillengrund der Quer- bzw. Schrägrille (7) nach außen bis zur die Straßenkontaktfläche bildenden Mantelfläche (6) erstreckt sind, wobei der Übergang zwischen Profilblockelementflanke (8) und Straßenkontaktfläche bildender Mantelfläche (6) an wenigstens einer der beiden Profilblockelementflanken über zumindest einen Teil der Erstreckung der Profilblockelementflanke (8) in axialer Richtung A des Fahrzeugreifens mit einer Fase (10,14) ausgebildet ist und die Fase (10,14) über ihre Erstreckung längs der Profilblockelementflanke (8) hinweg reichend mit einer oder mehreren jeweils als Feineinschnitt ausgebildeten Vertiefungen (11) ausgebildet ist,
**dadurch gekennzeichnet,**
**dass** der Feineinschnitt (11) mit seiner Erstreckung in der Fase (10) geradlinig jeweils unter Einschluss eines Winkels α zur zugeordneten Profilblockelementflanke (8) ausgebildet ist mit 180° > α > 0°, insbesondere mit 80° ≤ α ≤100°ausgebildet ist und dass der Feineinschnitt (11) jeweils in Verlängerung über die Fase (10) hinaus in der die Straßenkontaktfläche bildenden Mantelfläche (6) bis in einen Abstand a von der der Fase (10) zuzuordnenden Profilblockelementflanke (8) erstreckt ist mit a ≤ (1/3)L, wobei L die in der Position des Feineinschnitts (11) an der der Fase (10) zuzuordnenden Profilblockelementflanke (8) in Umfangsrichtung U des Fahrzeugreifens gemessenen Erstreckungslänge des Profilblockelementes (1) ist.

2. Laufstreifenprofil gemäß den Merkmalen von Anspruch 1,
dass die Fase (10,14) über ihre Erstreckung längs der Profilblockelementflanke (8) hinweg reichend mit mehreren in Erstreckungsrichtung der Profilblockelementflanke (8) verteilt und jeweils im Abstand c zueinander angeordneten Vertiefungen (11,12,13) ausgebildet ist mit c ≥ 1mm, insbesondere mit c ≤ 10mm.

3. Laufstreifenprofil gemäß den Merkmalen von Anspruch 1,
dass der Feineinschnitt (11) mit einer in radialer Richtung R des Fahrzeugreifens gemessenen maximalen Tiefe t₁ ausgebildet ist mit t₁ ≤ (2/3)P_{T}, wobei P_{T} die maximale Profiltiefe gemessen in der der Fase (10) zuzuordnenden Querrille (7) ist.

4. Laufstreifenprofil gemäß den Merkmalen von Anspruch 3,
dass der Feineinschnitt (11) mit einer in radialer Richtung R des Fahrzeugreifens gemessenen maximalen Tiefe t₁ ausgebildet ist mit 1 mm ≤ t₁ ≤ 3mm.

5. Laufstreifenprofil gemäß den Merkmalen von Anspruch 1,
dass der Feineinschnitt (11) mit einer Verlängerung über die Fase (10) hinaus in der der Fase (10) zuzuordnenden Profilblockelementflanke (8) ausgebildet ist und in der Profilblockelementflanke (8) seine ausgehend von der radial äußeren Mantelfläche (6) in radialer Richtung R des Fahrzeugreifens gemessene maximalen Tiefe t₁ aufweist.

6. Laufstreifenprofil gemäß den Merkmalen von einem oder mehreren der vorangegangenen Ansprüche,
wobei die Fase (10) als zumindest im Wesentlichen ebene zur Mantelfläche geneigte Fläche ausgebildet ist, die längs der Schnittlinie (16) mit der die radial äußere Mantelfläche bildenden Oberfläche (6) des Profilblockelementes einen Winkel β mit der die radial äußere Mantelfläche bildenden Oberfläche (6) einschließt mit 30° ≤ β ≤ 60° - insbesondere mit β = 45°.

7. Laufstreifenprofil gemäß den Merkmalen von einem oder mehreren der Ansprüche 1 bis 5,
wobei die Fase (14) in Form einer Hohlkehle ausgebildet ist, deren Krümmungsachse m auf der vom Profilblockelement (1) weggewandten Seite der Fase (14) angeordnet und die sich längs der Querrille (7) erstreckt, mit Krümmungsradien R_{H} der Hohlkehle, die innerhalb des Erstreckungsbereichs der Fase (14) mit 2mm ≤ R_{H} ≤ 10mm ausgebildet sind.

8. Laufstreifenprofil gemäß den Merkmalen von Anspruch 7,
wobei die Hohlkehle längs der gesamten Erstreckung der Fase (14) mit konstantem Krümmungsradius R_{H} ausgebildet ist.

9. Laufstreifenprofil gemäß den Merkmalen von Anspruch 7,
wobei die Hohlkehle längs der Erstreckung der Fase (14) mit kontinuierlich zunehmendem Krümmungsradius R_{H} ausgebildet ist.

## Claims

1. Tread profile of a vehicle tyre - in particular a pneumatic vehicle tyre - with profile block elements (1), which are spaced apart from one another by transverse or angled grooves (7) and are arranged one behind the other in the circumferential direction U of the vehicle tyre, in which profile block elements (1) are respectively delimited in the circumferential direction U by a profile block element flank (8, 9) and outwardly in the radial direction R of the vehicle tyre by a lateral surface (6) forming the road contact surface, wherein these profile block element flanks (8, 9) respectively form the groove wall of one of the two transverse or angled grooves (7) delimiting the profile block element (1) in the circumferential direction U and these profile block element flanks (8, 9) are respectively made to extend outwards in the radial direction R, from the groove base of the transverse or angled grooves (7) to the lateral surface (6) forming the road contact surface, wherein the transition between the profile block element flank (8) and the lateral surface (6) forming the road contact surface is formed with a bevel (10, 14) on at least one of the two profile block element flanks over at least part of the extent of the profile block element flank (8) in the axial direction A of the vehicle tyre and the bevel (10, 14) is formed over its extent along the profile block element flank (8) with one or more depressions (11) respectively formed as a sipe, **characterized**
**in that** the sipe (11) is formed so as to extend rectilinearly in the bevel (10), respectively including an angle α in relation to the assigned profile block element flank (8), with 180° > α > 0°, in particular with 80° ≤ α ≤ 100°, and in that the sipe (11) is respectively made to extend beyond the bevel (10) as an extension in the lateral surface (6) forming the road contact surface, to a distance a from the profile block element flank (8) to be assigned to the bevel (10), with a ≤ (1/3)L, where L is the length of the extent of the profile block element (1), measured in the circumferential direction U of the vehicle tyre, in the position of the sipe (11) on the profile block element flank (8) to be assigned to the bevel (10).

2. Tread profile according to the features of Claim 1, **characterized in that** the bevel (10, 14) is formed over its extent along the profile block element flank (8) with a number of depressions (11, 12, 13) distributed in the direction of extent of the profile block element flank (8) and respectively arranged at the distance c from one another, with c ≥ 1 mm, in particular with c ≤ 10 mm.

3. Tread profile according to the features of Claim 1, **characterized in that** the sipe (11) is formed with a maximum depth t₁, measured in the radial direction R of the vehicle tyre, with t₁ ≤ (2/3)P_{T}, where P_{T} is the maximum profile depth measured in the transverse groove (7) to be assigned to the bevel (10).

4. Tread profile according to the features of Claim 3, **characterized in that** the sipe (11) is formed with a maximum depth t₁, measured in the radial direction of the vehicle type, with 1mm ≤ t₁ ≤ 3mm.

5. Tread profile according to the features of Claim 1, **characterized in that** the sipe (11) is formed with an extension beyond the bevel (10) in the profile block element flank (8) to be assigned to the bevel (10) and has in the profile block element flank (8) its maximum depth t₁, measured in the radial direction R of the vehicle tyre from the radially outer lateral surface (6).

6. Tread profile according to the features of one or more of the preceding claims,
wherein the bevel (10) is formed as an at least substantially planar surface which is inclined in relation to the lateral surface and, along the line of intersection (16) with the surface (6) of the profile block element forming the outer lateral surface, includes an angle β with surface (6) forming radially outer latered surface (6), with 30° ≤ β ≤ 60° - in particular with β = 45°.

7. Tread profile according to the features of one or more of Claims 1 to 5,
wherein the bevel (14) is given the form of a hollow fillet, the axis of curvature m of which is arranged on the side of the bevel (14) that is facing away from the profile block element (1) and which extends along the transverse groove (7), with radii of curvature R_{H} of the hollow fillet that are formed within the range of extent of the bevel (14) with 2 mm ≤ R_{H} ≤ 10 mm.

8. Tread profile according to the features of Claim 7, wherein the hollow fillet is formed with a constant radius of curvature R_{H} along the entire extent of the bevel (14).

9. Tread profile according to the features of Claim 7, wherein the hollow fillet is formed with a continuously increasing radius of curvature R_{H} along the extent of the bevel (14).

## Revendications

1. Profil de bande de roulement de bandage pour roue de véhicule, en particulier de bandage pneumatique pour roue de véhicule, présentant des éléments (1) de bloc profilé disposés les uns derrière les autres dans la direction périphérique U du bandage pour roue de véhicule et séparés les uns des autres par des rainures transversales ou obliques (7),
les éléments (1) de bloc profilé étant tous délimités dans la direction périphérique U par un flanc (8, 9) d'élément de bloc profilé dans la direction radiale R du bandage pour roue de véhicule et vers l'extérieur par une surface d'enveloppe (6) qui forme la surface de contact avec la chaussée,
ces flancs (8, 9) d'éléments de bloc profilé formant chacun la paroi d'une des deux rainures transversales ou obliques (7) qui délimitent l'élément (1) de bloc profilé dans la direction périphérique U et ces flancs (8, 9) d'éléments de bloc profilé s'étendant chacun dans la direction radiale R entre le fond de la rainure transversale ou oblique (7) et la surface d'enveloppe (6) qui forme la surface de contact avec la chaussée vers l'extérieur,
la transition entre le flanc (8) d'élément de bloc profilé et la surface d'enveloppe (6) qui forme la surface de contact avec la chaussée sur au moins l'un des deux flancs d'éléments de bloc profilé étant formée sur au moins une partie de l'extension du flanc (8) de l'élément de bloc profilé dans la direction axiale A du bandage pour roue de véhicule avec un chanfrein (10, 14), le chanfrein (10, 14) étant configuré sur son extension le long du flanc (8) d'élément de bloc profilé et sur toute sa longueur avec un ou plusieurs creux (11), tous configurés comme fines entailles, **caractérisé en ce que**
la fine entaille (11) est configurée avec une extension rectiligne dans le chanfrein (10) qui forme un angle α par rapport au flanc (8) de l'élément de bloc profilé associé, avec 180° > α > 0° et en particulier 80° ≤ α ≤ 100° et
**en ce que** la fine entaille (11) s'étend chaque fois en se prolongeant au-delà du chanfrein (10) dans la surface d'enveloppe (6) qui forme la surface de contact avec la chaussée jusqu'à une distance a du flanc (8) de l'élément de bloc profilé associé au chanfrein (10), avec a ≤ (1/3)L, L étant la longueur de l'extension de l'élément (1) de bloc profilé mesurée dans la direction périphérique U du bandage pour roue de véhicule dans la position de la fine entaille (11) sur le flanc (8) de l'élément de bloc profilé qui est associé au chanfrein (10).

2. Profil de bande de roulement selon les caractéristiques de la revendication 1, **caractérisé en ce que** la totalité de la longueur du chanfrein (10, 14) sur son extension le long de l'élément (8) d'élément de bloc profilé est configurée avec plusieurs creux (11, 12, 13) répartis dans la direction du flanc (8) d'élément de bloc profilé et disposés à une distance mutuelle c, avec c ≤ 1 mm et en particulier c ≤ 10 mm.

3. Profil de bande de roulement selon les caractéristiques de la revendication 1, **caractérisé en ce que** la fine entaille (11) est configurée avec une profondeur maximale t₁ mesurée dans la direction radiale R du bandage pour roue de véhicule, avec t₁ ≤ (2/3)P_{T}, P_{T} étant la profondeur maximale du profil mesurée dans la rainure transversale (7) associée au chanfrein (10).

4. Profil de bande de roulement selon les caractéristiques de la revendication 3, **caractérisé en ce que** la fine entaille (11) est configurée avec une profondeur maximale t₁, mesurée dans la direction radiale R du bandage pour roue de véhicule, avec 1 mm ≤ t₁ ≤ 3 mm.

5. Profil de bande de roulement selon les caractéristiques de la revendication 1, **caractérisé en ce que** la fine entaille (11) est configurée en se prolongeant sur tout le chanfrein (10) dans le flanc (8) de l'élément de bloc profilé associé au chanfrein (10) et partant de la surface d'enveloppe (6) radialement extérieure, présente sa profondeur maximale t₁, mesurée dans la direction radiale R du bandage pour roue de véhicule dans le flanc (8) de l'élément de bloc profilé.

6. Profil de bande de roulement selon les caractéristiques d'une ou plusieurs des revendications précédentes, dans lequel le chanfrein (10) est configuré comme surface inclinée de manière essentiellement plane par rapport à la surface d'enveloppe et forme, le long de la ligne de coupe (16), avec la surface (6) de l'élément de bloc profilé qui constitue la surface d'enveloppe radialement extérieure un angle β avec la surface (6) qui forme la surface d'enveloppe radialement extérieure, avec 30° ≤ β ≤ 60° et en particulier β = 45°.

7. Profil de bande de roulement selon les caractéristiques d'une ou plusieurs des revendications 1 à 5, **caractérisé en ce que** le chanfrein (14) est configuré en biseau creux dont l'axe de courbure M est disposé sur le côté du chanfrein (14) non tourné vers l'élément (1) de bloc profilé et qui s'étend le long de la rainure transversale (7), les rayons de courbure R_{H} des biseaux creux qui s'étendent à l'intérieur de l'extension du chanfrein (14) étant configurés avec 2 mm ≤ R_{H} ≤ 10 mm.

8. Profil de bande de roulement selon les caractéristiques de la revendication 7, dans lequel le biseau creux est configuré avec un rayon de courbure R_{H} constant sur toute l'extension du chanfrein (14).

9. Profil de bande de roulement selon les caractéristiques de la revendication 7, dans lequel le biseau creux est configuré avec un rayon de courbure R_{H} qui croît de manière continue le long de l'extension du chanfrein (14).
